# EUROPEAN PATENT SPECIFICATION

(11) **EP 2 483 189 B1**
(45) Date of publication and mention of the grant of the patent: **27.09.2017**
(21) Application number: 10819957.1
(22) Date of filing: 29.09.2010
(51) Int. Cl.: B65G 67/20

(54) **METHOD AND DEVICE FOR FILLING A CONTAINER**
VERFAHREN UND VORRICHTUNG ZUM BEFÜLLEN EINES GEBINDES
PROCÉDÉ ET DISPOSITIF POUR REMPLIR UN CONTENEUR

(30) Priority: 29.09.2009 FI 20095993
(43) Date of publication of application: 08.08.2012
(73) Proprietor: Järvensivu, Jouni, 39701 Parkano (FI)
(72) Inventor: Järvensivu, Jouni, 39701 Parkano (FI)
(74) Representative: Berggren Oy, Tampere
(86) International application number: PCT/FI2010/050748
(87) International publication number: WO 2011/039415

(56) References cited:
- EP-A1- 0 655 403
- WO-A1-2009/107084
- GB-A- 2 451 631
- US-A- 3 688 926
- US-A1- 2006 078 410

## Description

The invention relates to a method according to the preamble of claim 1 for filling a container with bulk goods. The invention also relates to a device according to the preamble of claim 4 for applying the method of the invention.

A container is normally a freight container that can be transferred from one transport vehicle to another without reloading of the contents. For this reason, the containers are typically designed to be stackable, easily movable and easy to be fastened to the transport vehicle. At present, there are quite a lot of different types of containers, and they are used in road, rail, air, and sea transportation, but also as barracks with interior fittings and as office spaces and other work spaces. In connection with the present invention, a container refers to a container intended for the transportation and/or storage of various bulk goods. Included are, for example, various freight containers, such as, for example, standardized ISO containers or a Euro container complying with the EU directive proposal, as well as all general-purpose containers and special containers, excluding tank containers intended for the transportation of liquids and/or gases only. Bulk goods, on the other hand, refer in the present application to e.g. material that contains separate pieces of metal, plastic, glass, composite, paper, cardboard or wood, but also various granular materials, such as wood chips, pellets, macadam, and rocks, as well as, for example, timber that can be e.g. round timber (such as blocks or logs of wood) or sawn wood (such as boards, planks or battens).

At present, containers intended for the transportation and/or storage of bulk goods are normally filled with the bulk goods by using a wheeled loader or another suitable loading machine equipped with a front loader. Normally, for example waste metal is loaded into a container by opening the doors at the end of the container lowered onto the ground, and by placing a so-called loading chute in the direct vicinity of the opening in front of the loading opening thus formed, the loading chute having vertical side walls at the side walls of the container, and a bottom, but being open at the top and at its both ends (such a loading chute can be made, for example, of a container whose end walls and roof has been removed). After this, waste metal to be loaded into the container is lifted with a crane or in another corresponding manner into the loading chute. Thus, the accumulating scrap pile is already shaped in the width direction of the container to fit between the side walls of the container. After lifting a suitable quantity of scrap, the accumulated scrap pile is pushed by the front loader of the working machine from the loading chute into the container so that the end opposite the loading opening is first filled up as well as possible. A suitable quantity of scrap to be pushed into the container at a time will depend on the type and weight of the scrap and on the pushing capacity of the working machine. After the pushing step, the chute is reloaded with a suitable quantity of scrap, followed by a new push of the scrap pile from the guiding chute into the container. These loading and pushing steps are repeated until the container is filled up as desired. Finally, the guiding chute is removed from the front of the loading opening of the container, and the doors of the container are closed, after which the container is ready to be lifted up (for example, by means of an interchangeable container device) into a transport vehicle and to be transported to a place of storage and/or unloading.

The filling of the container with scrap metal or other bulk goods stepwise in the above-described manner is slow and laborious. Furthermore, when the bulk goods include elongated or angular pieces or pieces pointed at the end, such as, for example, sharp rocks or steel bars pointed at the end, it is often possible that the pieces cause damage to or make holes in the walls of the container during the pushing of the bulk goods. As a result, damage faults and holes in the walls of container have to be repaired and patched up from time to time, which further increases the costs involved in the present method of filling.

To remedy this problem, special container filling devices have been recently developed. One such device is presented in application publication US 2006/0078410 A1, which discloses a method and a device for filling a container with bulk goods according to the preamble of claims 1 and 4 respectively. It comprises a frame to be placed on the ground, in front of the container, having a special load bin that can be urged from the end of the container into the container. When loading a container by the device, the load bin is first loaded to capacity when it is outside the container. After the loading step, the load bin is moved into the container, after which the load bin is pulled out of the container in such a way that the goods to be loaded into the container are kept confined within the container by means of a wall, that is, a load barrier, to be held in position at the loading opening of the container. Thus, the goods to be loaded are disposed within the container, while the load bin is retracted out of the container. Other container filling devices and assemblies of this type or having similar functions are disclosed, for example, in documents US 2009107084, GB 2451631 and US 3,688,926

These container filling devices of prior art have the drawback that the container cannot be filled quite to capacity, because the separate load bin to be transferred into the container is always slightly smaller than the inner space of the container. In the transportation of a container that has not been filled up, there is naturally a loss of free transportation capacity that could be utilized in situations in which the weight of the goods to be loaded does not delimit the quantity to be transported at a time smaller than the volume of the container.

It is an aim of the present invention to introduce a new method for filling a container with bulk goods, removing the above-mentioned drawbacks involved in the prior art. In particular, it is an aim of the invention to present a method by which the container can be loaded in an easier and faster way than conventional loading directly into the container but also in such a way that the container can be loaded, if desired, to a higher degree of filling than can be achieved with loading devices known from the above-mentioned publications. Another aim of the invention is to introduce a device that is suitable for applying the method.

The inventive idea of the invention is to load a container by using a loading device of the type presented in document US 2006/0078410 A1, in which the load barrier is, however, implemented in such a way that it can be tilted backwards (away from the container) at the step of filling the load space, wherein the length and the volume of the load bin to be moved into the container are increased and wherein the load barrier can be tilted forward (towards the inside of the container) when the load bin has been transferred into the container or, at the latest, when the load bin is retracted out of the container, wherein, among other things, the container can be filled with a quantity of goods that is larger than the quantity of goods corresponding to the load bin having the length of the container. To put it more precisely, the method according to the invention is as stated in claim 1, and the device according to the invention is as stated in claim 4.

The method and the device according to the invention provide significant advantages to the prior art. By using the method and the device according to the method, the loading of bulk goods into a container becomes easier and faster compared with the loading/filling of a container by a conventional working machine. By the method according to the invention, a higher degree of filling the container can also be achieved than by using container filling devices of prior art, as presented in publication US 2006/0078410 A1; thanks to the tilting function of the load barrier, the quantity of bulk goods that can be transferred into the container at a time is larger than by using a container filling device equipped with a rigid (not tilting) load barrier that fits in the container. In other words, the arrangement according to the invention makes it possible, by using the load filling device, to load containers to a higher degree of filling than before, that is, to eliminate the drawback involved in filling a container by a filling device of the publication US 2006/0078410 A1, namely the drawback that the container is not filled quite to capacity, because the load bin to be transferred into the container is always smaller than the inner space of the container. Thanks to the higher degree of filling of containers achieved in this way, the costs of transportation of bulk goods by the method and the device of the invention can be further reduced and the transportation can thereby become more profitable than with methods of prior art. Yet another advantage of such a method is the fact that thanks to the forward tilting of the load barrier, the bulk goods can be brought to such a shape at the mouth of the loading opening of the container that until the doors of the container are closed, no bulk goods can collapse or flow out of the container as easily as when container filling devices of prior art are applied.

In the following, the invention will be described in more detail with reference to the appended drawings, in which
- Fig. 1: shows a device according to a method of the invention in a side view,
- Fig. 2: shows the device according to Fig. 1 from above,
- Fig. 3: shows the device according to Figs. 1 and 2 in a front view,
- Fig. 4: shows a section A-A of the device according to Figs. 1 to 3,
- Fig. 5a: shows a device according to Figs. 1 to 3 in a side view, a container to be filled by it, as well as the position of a load bin and a load barrier at the step of filling the load bin,
- Fig. 5b: shows a device according to Figs. 1 to 3 in a side view, a container to be filled by it, as well as the position of the load bin and the load barrier when the load bin is inside the container,
- Fig. 5c: shows a device according to Figs. 1 to 3 in a side view, a container to be filled by it, as well as the position of the load bin and the load barrier at the step of retracting the load bin, and
- Fig. 6: is a principle drawing showing the more detailed structure and principle of operation of the load barrier in the device shown in the preceding figures, in a side view.

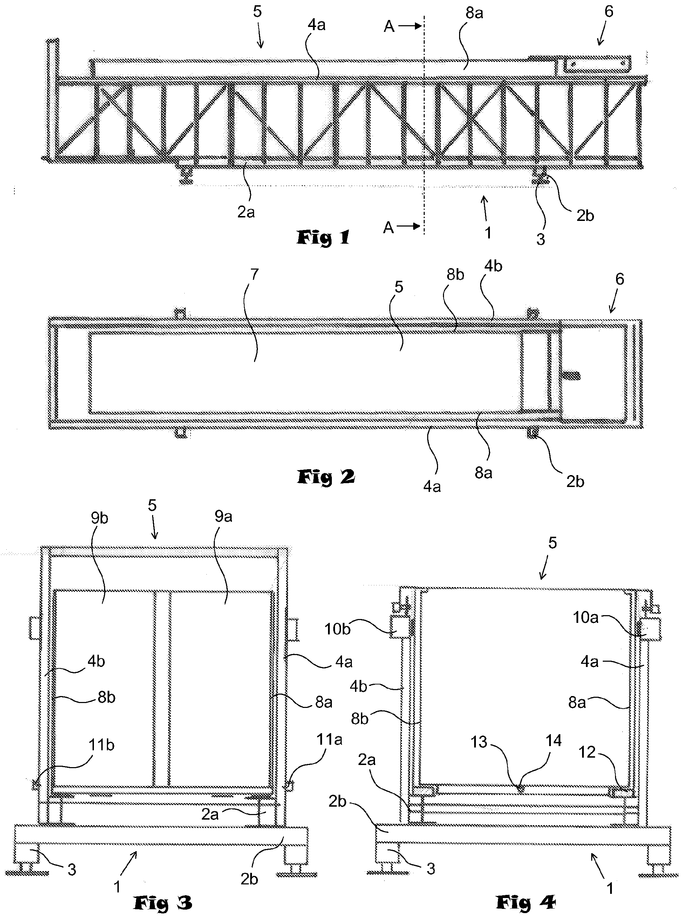

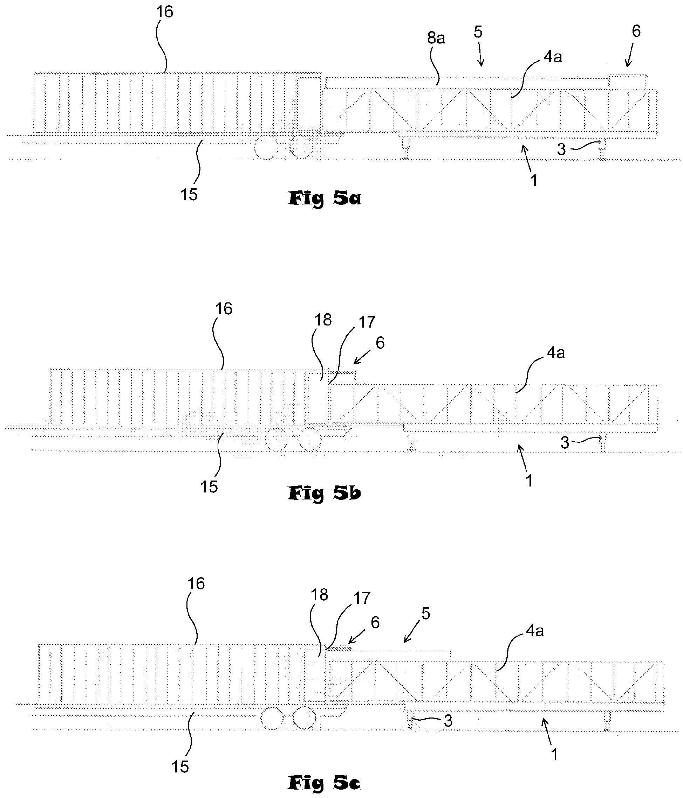

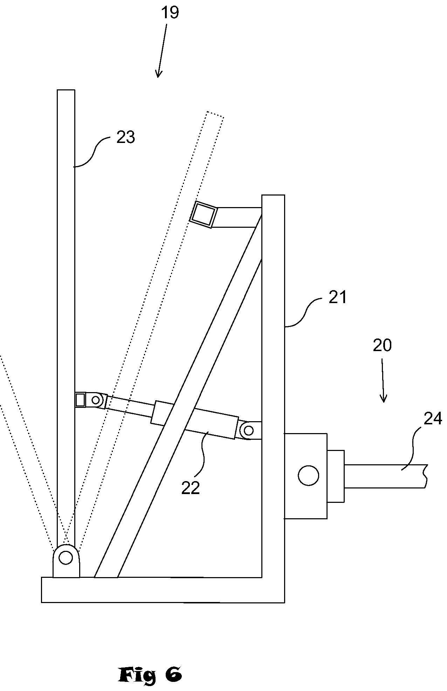

Figures 1 to 4 show a device according to the method of the invention, comprising a frame 1 constructed of tubular beams and to be installed on the ground, supported by bearer feet 3 of an adjustable height, the frame 1 consisting of longitudinal beams 2a connected to transverse beams 2b. On the outer sides of the longitudinal beams 2a of the frame 1, lateral supporting structures 4a and 4b are provided, between which a load bin 5 is installed to be movable in the longitudinal direction of the frame. In this case, the lateral supporting structures 4a and 4b are formed of sheet structures braced with tubular beams. The layout of the bracing beams is shown in Fig. 1 and Figs. 5a to 5c. In the rear part of the frame 2, there is a supporting structure, to which a load barrier 6 is fastened. A stopping member 19 belonging to the same is movable, like the load bin 5, with respect to the frame 2 in its longitudinal direction. The stopping member 19 can also be tilted forward and backward as shown in Fig. 6; consequently, the container 16 can be loaded to a higher degree of filling than by means of a rigid load barrier (that is, a load barrier where the stopping member is all the time in the same position). Furthermore, the front vertical beams of the lateral supporting structures 4a and 4b are provided with fixing clamps 11a and 11b, by means of which the container 16 to be loaded can be fastened in a detachable manner to the lateral supporting structures 4a and 4b of the device.

The adjustable bearer feet 3 are mounted at the ends of the transverse beams of the frame 2. The bearer feet 3 are adjustable by machine, irrespective of each other. Measurement of the weight of the device is also provided in connection with the frame 2, to determine the weight of the bulk goods loaded in the load bin. For the height adjustment by machine, each of the bearer feet has a separate hydraulic actuator (*e.g.* a hydraulic cylinder) for increasing or decreasing the length of the foot pipes of the bearer feet 3 formed of two pipes arranged within each other. Due to the adjustment irrespective of each other, the adjustment of the bearer feet 3 can be used for adjusting not only the height but also the position of the frame 1. In this case, the measurement of the weight of the device and thereby the load bin 5 is implemented by bringing separate measuring stands next to the bearer feet 3, which measuring stands are placed, for example, between the longitudinal beams 2a of the frame 2 and the surface of the ground so that the device can, by shortening the bearer feet 3, be lowered for the time of the measurement onto the support of these measuring stands, wherein the measurement results obtained by power sensors in the measuring stands can be used to define the weight of the contents of the load bin 5. Alternatively, it can also be implemented by measuring the pressure of pressurized medium led into the hydraulic cylinders of the bearer feet 3 or, for example, by power or pressure sensors installed in connection with the foot pipes. The measurement result of the weight of the load bin obtained in this way can be used for controlling the weight of the bulk goods to be loaded into the container in real time, when the system, provided in this way in the device, for measuring the weight of the load bin is coupled (for example wirelessly) to the data system of the owner of the device and/or, for example, an organization that has leased it. By means of such an arrangement, for example the user of the device or a company leasing it can monitor the quantity of bulk goods loaded in containers by using the device. Information obtained by weight measurements can also be transmitted via communication systems to, for example, municipal or government authorities, if, for example, it is desired to monitor the quantity of bulk goods transported in containers to a specific location.

The load bin 5 of the device comprises a rectangular bottom 7 and side walls 8a and 8b fastened to its both edges, and front doors 9a and 9b at the end on the container side of the load bin, which doors can be locked with a locking member. The wall that closes the rear end of the load bin is formed by a stopping member 19 of the load barrier, which can be locked at a desired point of the beams of the lateral supporting structures 4a and 4b by means of hydraulic locking devices 10a and 10b which are movable with the stopping member of the load barrier and which can be tilted forward and backward as shown in Fig. 4. The bottom 7 and the side walls 8a and 8b of the load bin are made of rectangular sheet pieces, such as steel sheets. The side walls 8a and 8b are fastened to the bottom 7 in a stationary manner, for example by welded joints. Furthermore, a required number of braces formed of beam structures are fastened in a way known as such outside the side walls 8a and 8b and the bottom 7, to make the side walls of the load bin 5 so rigid and strong that the construction withstands the pressing of bulk pieces to be loaded, for packing the load into the load bin as tightly as possibly. The aim has been to implement the layout of the braces to make the construction as light-weight as possible, in spite of the strength and the rigidity of the construction. Furthermore, wheels 12 shown in Fig. 4 are installed on the bottom of the load bin 5 (below the brace structures), to move the load bin on the frame beams 2a extending in the longitudinal direction of the frame 1. The load bin 5 is slightly shorter than the frame 1 so that the rear part of the frame is provided with space for the transfer devices for moving the load bin 5 and the load barrier 6.

In this embodiment, the load barrier 6 consists of the stopping member 19 shown in Fig. 6 and a transfer actuator 20 moving the same. The structure and function of the stopping member 19 are shown in more detail in Fig. 6. In this embodiment, the transfer actuator 20 is a double-acting hydraulic cylinder similar to the transfer device, its stationary end and movable end being fastened to the rear part of the frame 1 and the stopping member 19, respectively. The stopping member 19 comprises a bulldozer blade 23 with plate structure and a control and support structure 21 behind the same, to which the movable end 24 of the transfer actuator 20 is fastened. In this case, the bulldozer blade 23 has a rectangular shape, a width that is only slightly narrower than the distance between the inner surfaces of the side walls 8a and 8b of the load bin 5, and a height so high that its upper edge extends slightly above the side walls of the load bin 5 when the bulldozer blade 23 is in the vertical position. Thus, no large gaps are left between the bulldozer blade 23 and the side walls 8a and 8b of the load bin 5, wherein the stopping member can be used to prevent the entry of even relatively fine bulk goods behind the bulldozer blade 23. Thus, the bulldozer blade 23 can also be used to close tightly the loading opening 17 of the container (the container is shown in Figs. 5a to 5c), whose height is slightly greater than the height of the side walls 8a and 8b of the load bin 5. In this case, the guiding and supporting structure 21 is a tubular beam structure that comprises sliding posts placed against the bottom of the load bin. Thanks to these sliding posts, the stopping member 19 also moves relatively easily along the upper surface of the bottom 7 of the load bin, and no bending forces are exerted on the piston rod 24 of the hydraulic cylinder used as the transfer actuator 20. The bulldozer blade 23 of the stopping member 19 is fixed at its lower end to the guiding and supporting structure 21 in an articulated manner as shown in Fig. 6. A hydraulic cylinder 22 is provided between the upper part of the bulldozer blade 23 and the guiding and supporting structure 21, for tilting the bulldozer blade 23 forward and backward in an angle allowed by its travelling distance.

In this case, the transfer device for moving the load bin 5 consists of a hydraulic cylinder installed between the rear part of the load bin 5 and the rear part of the frame 2 (not shown in the figures). The stationary end and the movable end of this hydraulic cylinder are fixed to the rear part of the frame and to the rear part of the load bin, respectively. The hydraulic cylinder is a double-acting telescopic cylinder known as such, whose piston rod consists of two or more elements placed within each other to provide a sufficiently long travelling distance (for moving the whole load bin to the front of the frame 1).

Between the bottom 7 of the load bin 5 and the frame 1, a hydraulically driven locking of the load bin in its position is provided when the load bin 5 is in the loading position. This is implemented, in the present case, by a hydraulic cylinder 13 installed in the frame 1, its movable end being arranged to move a locking pin 14 movable between the frame 1 and the structures of the load bin 5 in such a way that it locks the load bin 5 in its place. The purpose of the locking is to secure that the load bin 5 remains stationary with respect to the frame 1 even during the loading of very heavy pieces.

Figures 5a to 5c show the principle of operation of the device according to Figs. 1 to 4 during the loading of bulk goods into a container according to the method of the invention. Before starting the loading, a container 16 to be filled is brought to the front of the device, for example on a trailer 15 equipped with an interchangeable container device. The trailer 15 carrying the container 16 is backed up to the front side of the front part of the frame 1 in such a way that the side walls of the container are simultaneously at least approximately aligned with the lateral supporting structures 4a and 4b fixed to the frame 1 of the device in the lateral direction, and the container is parallel to the longitudinal direction of the device. After this, the doors 18 of the loading opening 17 of the container are opened and the hydraulically adjustable bearer feet 3 of the device are adjusted so that the upper surface of the frame beams 2a extending in the longitudinal direction of the frame 1 is at the same level with the floor of the container 16, and both the container and the frame 1 of the device are also primarily parallel to the same horizontal plane. Next, the container 16 and the device are fixed to each other by means of fixing clamps 11a and 11b in the front part of the frame 1. At this stage at the latest, the stopping member 19 of the load barrier 6 is tilted backwards so that the volume of the load bin 5 can be increased as close to the volume of the container 16 as possible. After these preparatory steps, the device is ready for the loading of the load bin 5 and the filling of the container 16 in the next steps.

In the first step shown in Fig. 5a, bulk goods are loaded in the load bin 5. The loading normally takes place by lifting bulk goods, for example by a working machine equipped with a grab crane or a front loader, across the lateral supporting structures 4a and/or 4b and the side walls 8a and/or 8b of the load bin 5 to the bottom of the load bin. All the bulk goods to be loaded into the container are loaded in the load bin at a time; that is, the load bin is not emptied until all the bulk goods to be loaded in the container are in the load bin, or the load bin is full up. Normally, the aim is to fill the load bin as evenly and accurately as possible, but so that the pieces to be loaded do not extend significantly above the side walls of the load bin, because it would then be possible that these pieces might hit the transverse supporting beam above the load bin 5 in front of the device, and/or the ceiling of the container. Alternatively, the load bin 5 can be lowered by the bearer feet 3 as close to the ground surface as possible for the time of the loading, wherein the bulk goods can be loaded, for example, by pushing or transferring the bulk goods to be loaded into the load bin 5 from its front side, for example by a front loader of a working machine.

After the loading step, the load bin 5 is moved by the transfer device to the inside of the container 16 so that the stopping member of the load barrier is continuously moved with the load bin. Thus, the stopping member of the load barrier 6 keeps the rear end of the load bin 5 constantly closed and the bulk goods confined within the load bin 5. Figure 5b shows a situation in which the whole load bin is within the container 16. Thus, the stopping member of the load barrier 6 is at the location of the loading opening at the rear end of the container 16. After the load bin 5 has moved to the position shown in Fig. 5b, the locking of the front doors 9a and 9b is released and the load bin is moved back between the lateral supporting structures 4a and 4b. Thus, however, the stopping member of the load barrier 6 is still kept stationary (or is initially moved slightly outwards but only to the extent that the front doors 9a and 9b of the load bin can open inside the container) as shown in Fig. 4c, wherein the bulk goods contained in the load bin 5 cannot move with the load bin out of the container but remain in the container. During the pulling out of the load bin 5, or even before it is started, the stopping member 19 of the load barrier 6 is turned forward so that the bulldozer blade 23 of the stopping member 19, which was previously partly outside the container 16, and the bulk goods in front of the blade, are transferred in whole to the inside of the container 16. After this, the load barrier 6 is also moved back to the rear part of the load bin 5, after which the doors 18 of the loading opening 17 of the container are shut. At this stage, the front doors 9a and 9b of the load bin are also shut and locked by a respective locking device. After these actual loading operations, the fixing clamps 11a and 11b between the container and the device are released, after which the trailer 15 and the container on it are moved away from the loading place. The device is then ready for loading a new container again.

The method and the device according to the invention can be implemented, in many respects, in a way different from the above-described example application by applying the inventive idea described above. In the above-described example application, the container is loaded through a loading opening at the end of the container. However, the method according to the invention is naturally not limited to such a solution only, but the loading of the container by applying a corresponding principle can also take place, for example, through a loading opening on the side wall of the container. In such an application of the method, the loading opening could be, in principle, a loading opening having the width of, for example, one side wall of the whole container. Thus, the width of the load bin belonging to the device should also be greater than the length of the load bin. In other words, in such a solution, the load bin would be pushed into the container and pulled out in its transverse direction from the side of the container. An advantage in such an application would be, among other things, the fact that the travel distances of the load bin and the load barrier would not need to be as long as in the approaches, in which the container is loaded through a loading opening at its end. This would simplify the structure of the load bin and the transfer actuators. Furthermore, this kind of an application of the device could also be implemented with a device comprising two or more load bins movable separately from each other (in the lateral direction of the container), each having a separate load barrier and all being pushed, when filled up, into the container from its side in one go and being pulled out one by one so that after pulling out a single load bin, the respective loading opening (that is, a part of the side wall of the container) at said load bin would be shut.

It should also be noted that many functional and structural technical solutions required by the different steps of implementing the method of the invention can be implemented in a variety of ways without deviating from the inventive idea defined in the claims. For example, instead of using a hydraulic cylinder, the load bin and the load barrier could be moved and the stopping means of the load barrier could be tilted by many other transfer devices or transfer mechanisms commonly used in such arrangements. Thus, the transfer of the load bin and/or the load barrier and the tilting of the stopping member could be alternatively effected by means of, for example, a hydraulic motor and a toothed bar, a chain, a wire cable, or the like. The fixing clamps of the container, the function and the locking of the front doors, the adjusting mechanisms of the bearer feet, among other things, can also be implemented in a variety of ways to achieve the operation of the device according to the method corresponding to the above-described example application. For example, in a device in which the container is filled through a loading opening in its side wall, it is possible to use front doors formed of a single door that opens upwards, or two doors, one opening upwards and the other downwards. The front doors could also be implemented as a sliding door or a lattice door to be pulled from the end or the side wall of the load bin onto it or to both sides, wherein the opening of the front doors inside the container would consume less space than with the front doors of the above-described type, equipped with plate-like doors leafs. In some applications, the load bin can also be implemented in such a way that no front doors are installed in it, but the front wall of the load bin is left open at the loading opening of the container. Furthermore, it should be noted that, among other things, the fixing clamps belonging to the device can be alternatively implemented in such a way that the device can be fixed with them to a transport vehicle carrying the container in addition to or instead of the container.

The invention is not limited to the above-presented example embodiments, but it may vary within the scope of the inventive idea presented in the appended claims.

## Claims

1. A method for filling a container (16) with bulk goods, in which method
- the end or side wall (18) of the container (16) or at least part of it is opened, wherein the container (16) is provided with a loading opening (17) for loading bulk goods,
- a device is provided in front of the loading opening (17) of the container (16), comprising a load bin (5) that can be moved through the loading opening (17) into and out of the container and that can be opened at least at the location of the loading opening (17), as well as a load barrier (6) that can be fitted in and moved in relation to the load bin,
- the bulk goods are loaded in the load bin (5), on the side of the container (16) with respect to the load barrier (6),
- the load bin (5) is moved through the loading opening (17) at least partly to the inside of the container (16) in such a way that the load barrier (6) is transferred with the load bin (5) at least primarily to the location of the loading opening (17),
- the load bin (5) is moved through the loading opening (17) out of the container (16) so that the bulk goods are simultaneously held inside the container by the load barrier (6), wherein the load bin (5) moves back outside the container (16) but the bulk goods remain in the container (16),
**characterized in that**
- the load barrier (6) is tilted backwards before or during the step of loading the load bin (5),
- the load barrier (6) is tilted forward during or after transferring the load bin (5) at least partly into the container (16).

2. The method according to claim 1, **characterized in that** before starting the filling of the container, the height of the device is adjusted so that the load bin (5) moves in the height direction to the location of the loading opening (17).

3. The method according to claim 1 or 2, **characterized in that** during filling of the container (16), both the device and the container (16) and/or the transport vehicle (15) carrying the container (16) are fixed to each other.

4. A device for filling a container (16) with bulk goods, the device being arranged to fill the container (16) through a loading opening (17) in its end or side wall, and the device comprising
- a frame (1);
- a load bin (5) installed in and movable with respect to the frame (1), in which load bin the bulk goods can be loaded and which load bin can be moved along the frame (1) at least partly through the loading opening (17) of the container (16) in front of the device to the inside of the container (16) and back out of it,
- at least one wall (9a, 9b) of the load bin (5) that is open or can be closed in an openable manner at least in the direction of the loading opening (17) of the container (16),
- at least one load barrier (6) fitted inside the load bin (5) and movable with respect to the load bin (5), for moving the bulk goods or for keeping them in position when the load bin (5) is moved with respect to the frame (1),
**characterized in that**
- the device comprises means (19, 21-23) for tilting the load barrier (6) forward and backward.

5. The device according to claim 4, **characterized in that** the load bin (5) comprises at least a rectangular bottom (7) and side walls (8a, 8b) fixed in a transverse direction with respect to it.

6. The device according to claim 4 or 5, **characterized in that** the load bin (5) is fixed to the frame (1) of the device to be movable in the longitudinal direction of the side walls (8a, 8b), and that the device comprises a transfer device for moving the load bin (5) with respect to the frame (1).

7. The device according to any of the claims 4 to 6, **characterized in that** the frame (1) comprises lateral supporting structures (4a, 4b) extending in the direction of movement of the load bin (5), for preventing movements of the load bin (5) transverse to the direction of movement.

8. The device according to any of the claims 4 to 7, **characterized in that** the load barrier (6) comprises a stopping member (19) fastened by a transfer device between the side walls (8a, 8b) of the load bin (5), to be movable in the direction of the side walls (8a, 8b) of the load bin (5).

9. The device according to claim 8, **characterized in that** the transfer device is arranged to move the stopping member (19) irrespective of the location and movements of the load bin (5).

10. The device according to claim 8 or 9, **characterized in that** the stopping member (19) is fastened to the load barrier (6), to be pivotable with respect to a horizontal axis transverse to the longitudinal direction of the load bin (5) in such a way that the stopping member (19) can be pivoted from the vertical position in an angle backwards and forwards.

11. The device according to any of the claims 4 to 10, **characterized in that** the frame (1) comprises bearer legs (3) whose length can be adjusted separately from each other, to adjust the height and position of the frame (1).

12. The device according to any of the claims 4 to 11, **characterized in that** the frame (1) comprises fixing means (11a, 11b) for fixing the frame (1) to the container (16) and/or a transport vehicle (15) carrying the same.

## Patentansprüche

1. Ein Verfahren zum Befüllen eines Containers (16) mit Massengütern, wobei bei diesem Verfahren
- die End- oder Seitenwand (18) des Containers (16) oder zumindest ein Teil davon geöffnet ist, wobei der Container (16) mit einer Ladeöffnung (17) zum Laden von Massengütern versehen ist,
- eine Vorrichtung vor der Ladeöffnung (17) des Containers (16) vorgesehen ist, die einen Ladebehälter (5) aufweist, der durch die Ladeöffnung (17) in den Container und aus diesem heraus bewegt werden kann und der mindestens an der Stelle der Ladeöffnung (17) geöffnet werden kann, sowie eine Ladebegrenzung (6), die in dem Ladebehälter befestigt und in Bezug zu diesem bewegt werden kann,
- die Massengüter in den Ladebehälter (5) geladen werden, auf der Seite des Containers (16) bezüglich der Ladebegrenzung (6),
- der Ladebehälter (5) durch die Ladeöffnung (17) mindestens teilweise in das Innere des Containers (16) derart bewegt wird, dass die Ladebegrenzung (6) mit dem Ladebehälter (5) zumindest primär an die Stelle der Ladeöffnung (17) befördert wird,
- der Ladebehälter (5) durch die Ladeöffnung (17) aus dem Container (16) so heraus bewegt wird, dass die Massengüter gleichzeitig durch die Ladebegrenzung (6) in dem Container gehalten werden, wobei sich der Ladebehälter (5) zurück nach außerhalb des Containers (16) bewegt, aber die Massengüter im Container (16) bleiben,
**dadurch gekennzeichnet, dass**
- die Ladebegrenzung (6) vor oder während des Schrittes des Beladens des Ladebehälters (5) nach hinten geneigt wird,
- die Ladebegrenzung (6) während oder nach dem Befördern des Ladebehälters (5) zumindest teilweise in den Container (16) nach vorne geneigt wird.

2. Verfahren gemäß Anspruch 1, **dadurch gekennzeichnet, dass** vor dem Beginn des Befüllens des Containers die Höhe der Vorrichtung so angepasst wird, dass sich der Ladebehälter (5) in der Höhenrichtung zur Stelle der Ladeöffnung (17) bewegt.

3. Verfahren gemäß Anspruch 1 oder 2, **dadurch gekennzeichnet, dass** während des Befüllens des Containers (16) sowohl die Vorrichtung als auch der Container (16) und/oder das den Behälter (16) tragende Transportfahrzeug (15) aneinander befestigt sind.

4. Eine Vorrichtung zum Befüllen eines Containers (16) mit Massengütern, wobei die Vorrichtung angeordnet ist, um den Container (16) durch eine Ladeöffnung (17) an seiner End- oder Seitenwand zu befüllen, und die Vorrichtung Folgendes aufweist:
- einen Rahmen (1);
- einen Ladebehälter (5), der in dem Rahmen installiert und relativ zu diesem beweglich ist, wobei die Massengüter in den Ladebehälter geladen werden können und wobei der Ladebehälter entlang des Rahmens (1) mindestens teilweise durch die Ladeöffnung (17) des Containers (16) vor der Vorrichtung in das Innere des Containers (16) und wieder heraus bewegt werden kann,
- mindestens eine Wand (9a, 9b) des Ladebehälters (5), die offen ist oder auf öffenbare Weise mindestens in der Richtung der Ladeöffnung (17) des Containers (16) geschlossen werden kann,
- mindestens eine Ladebegrenzung (6), die in dem Ladebehälter (5) angebracht und bezüglich des Ladebehälters (5) beweglich ist, um die Massengüter zu bewegen oder sie in Position zu halten, wenn der Ladebehälter (5) bezüglich des Rahmens (1) bewegt wird,
**dadurch gekennzeichnet, dass**
- die Vorrichtung Mittel (19, 21-23) zum Vor- und Zurückneigen der Ladebegrenzung (6) aufweist.

5. Vorrichtung gemäß Anspruch 4, **dadurch gekennzeichnet, dass** der Ladebehälter (5) mindestens einen rechteckigen Boden (7) und Seitenwände (8a, 8b) aufweist, die dazu in Querrichtung befestigt sind.

6. Vorrichtung gemäß Anspruch 4 oder 5, **dadurch gekennzeichnet, dass** der Ladebehälter (5) am Rahmen (1) der Vorrichtung befestigt ist, um in Längsrichtung der Seitenwände (8a, 8b) beweglich zu sein, und dass die Vorrichtung eine Transfervorrichtung zum Bewegen des Ladebehälters (5) bezüglich des Rahmens (1) aufweist.

7. Vorrichtung gemäß einem der Ansprüche 4 bis 6, **dadurch gekennzeichnet, dass** der Rahmen (1) seitliche Stützstrukturen (4a, 4b) aufweist, die in der Bewegungsrichtung des Ladebehälters (5) verlaufen, um Bewegungen des Ladebehälters (5) quer zur Bewegungsrichtung zu verhindern.

8. Vorrichtung gemäß einem der Ansprüche 4 bis 7, **dadurch gekennzeichnet, dass** die Ladebegrenzung (6) ein Anschlagelement (19) aufweist, das über eine Transfervorrichtung zwischen den Seitenwänden (8a, 8b) des Ladebehälters (5) befestigt ist, um in Richtung der Seitenwände (8a, 8b) des Ladebehälters (5) beweglich zu sein.

9. Vorrichtung gemäß Anspruch 8, **dadurch gekennzeichnet, dass** die Transfervorrichtung angeordnet ist, um das Anschlagelement (19) unabhängig von der Stelle und den Bewegungen des Ladebehälters (5) zu bewegen.

10. Vorrichtung gemäß Anspruch 8 oder 9, **dadurch gekennzeichnet, dass** das Anschlagelement (19) an der Ladebegrenzung (6) befestigt ist, um bezüglich einer horizontalen Achse quer zur Längsrichtung des Ladebehälters (5) derart schwenkbar zu sein, dass sich das Anschlagelement (19) aus der vertikalen Position in einem Winkel nach hinten und nach vorne schwenken lässt.

11. Vorrichtung gemäß einem der Ansprüche 4 bis 10, **dadurch gekennzeichnet, dass** der Rahmen (1) Tragefüße (3) aufweist, deren Länge unabhängig voneinander einstellbar ist, um die Höhe und Position des Rahmens (1) anzupassen.

12. Vorrichtung gemäß einem der Ansprüche 4 bis 11, **dadurch gekennzeichnet, dass** der Rahmen (1) Befestigungsmittel (11a, 11b) zum Befestigen des Rahmens (1) am Container (16) und/oder an einem diesen tragenden Transportfahrzeug (15) aufweist.

## Revendications

1. Procédé de remplissage d'un conteneur (16) avec des marchandises en vrac, dans lequel procédé
- l'extrémité ou la paroi latérale (18) du conteneur (16) ou au moins une partie de celle-ci est ouverte, dans lequel le conteneur (16) est doté d'une ouverture (17) de chargement pour charger des marchandises en vrac,
- un dispositif est disposé en avant de l'ouverture (17) de chargement du conteneur (16), comprenant une caisse (5) de chargement qui peut être déplacée à travers l'ouverture (17) de chargement dans le et hors du conteneur et qui peut être ouverte au moins à l'emplacement de l'ouverture (17) de chargement, ainsi qu'une barrière (6) de chargement qui peut être installée dans et déplacée en relation avec la caisse de chargement,
- les marchandises en vrac sont chargées dans la caisse (5) de chargement, sur le côté du conteneur (16) par rapport à la barrière (6) de chargement,
- la caisse (5) de chargement est déplacée à travers l'ouverture (17) de chargement au moins partiellement jusqu'à l'intérieur du conteneur (16) de telle manière que la barrière (6) de chargement est transférée avec la caisse (5) de chargement au moins en premier lieu jusqu'à l'emplacement de l'ouverture (17) de chargement,
- la caisse (5) de chargement est déplacée à travers l'ouverture (17) de chargement hors du conteneur (16) de telle sorte que les marchandises en vrac sont simultanément maintenues à l'intérieur du conteneur par la barrière (6) de chargement, dans lequel la caisse (5) de chargement recule à l'extérieur du conteneur (16) mais les marchandises en vrac restent dans le conteneur (16),
**caractérisé en ce que**
- la barrière (6) de chargement est basculée vers l'arrière avant ou pendant l'étape de chargement de la caisse (5) de chargement,
- la barrière (6) de chargement est basculée vers l'avant pendant ou après le transfert de la caisse (5) de chargement au moins partiellement à l'intérieur du conteneur (16).

2. Procédé selon la revendication 1, **caractérisé en ce que**, avant le début du remplissage du conteneur, la hauteur du dispositif est ajustée de telle sorte que la caisse (5) de chargement se déplace dans le sens de la hauteur jusqu'à l'emplacement de l'ouverture (17) de chargement.

3. Procédé selon la revendication 1 ou 2, **caractérisé en ce que**, pendant le remplissage du conteneur (16), le dispositif et le conteneur (16) et/ou le véhicule (15) de transport portant le conteneur (16) sont fixés l'un à l'autre/les uns aux autres.

4. Dispositif pour remplir un conteneur (16) avec des marchandises en vrac, le dispositif étant agencé pour remplir le conteneur (16) à travers une ouverture (17) de chargement dans son extrémité ou sa paroi latérale, et le dispositif comprenant
- un châssis (1);
- une caisse (5) de chargement installée dans le et mobile par rapport au châssis (1), dans laquelle caisse de chargement les marchandises en vrac peuvent être chargées et laquelle caisse de chargement peut être déplacée le long du châssis (1) au moins partiellement à travers l'ouverture (17) de chargement du conteneur (16) en avant du dispositif jusqu'à l'intérieur du conteneur (16) et vers l'arrière hors de celui-ci,
- au moins une paroi (9a, 9b) de la caisse (5) de chargement qui est ouverte ou peut être fermée de manière ouvrable au moins dans la direction de l'ouverture (17) de chargement du conteneur (16),
- au moins une barrière (6) de chargement disposée à l'intérieur de la caisse (5) de chargement et mobile par rapport à la caisse (5) de chargement, pour déplacer les marchandises en vrac ou pour les maintenir en position lorsque la caisse (5) de chargement est déplacée par rapport au châssis (1),
**caractérisé en ce que**
- le dispositif comprend des moyens (19, 21-23) pour basculer la barrière (6) de chargement vers l'avant et vers l'arrière.

5. Dispositif selon la revendication 4, **caractérisé en ce que** la caisse (5) de chargement comprend au moins un fond rectangulaire (7) et des parois latérales (8a, 8b) fixées dans un sens transversal par rapport à celui-ci.

6. Dispositif selon la revendication 4 ou 5, **caractérisé en ce que** la caisse (5) de chargement est fixée au châssis (1) du dispositif pour être mobile dans le sens longitudinal des parois latérales (8a, 8b), et **en ce que** le dispositif comprend un dispositif de transfert pour déplacer la caisse (5) de chargement par rapport au châssis (1).

7. Dispositif selon l'une quelconque des revendications 4 à 6, **caractérisé en ce que** le châssis (1) comprend des structures de support latérales (4a, 4b) s'étendant dans le sens de mouvement de la caisse (5) de chargement, pour empêcher des mouvements de la caisse (5) de chargement transversaux au sens de mouvement.

8. Dispositif selon l'une quelconque des revendications 4 à 7, **caractérisé en ce que** la barrière (6) de chargement comprend un élément (19) d'arrêt fixé par un dispositif de transfert entre les parois latérales (8a, 8b) de la caisse (5) de chargement, pour être mobile dans le sens des parois latérales (8a, 8b) de la caisse (5) de chargement.

9. Dispositif selon la revendication 8, **caractérisé en ce que** le dispositif de transfert est agencé pour déplacer l'élément (19) d'arrêt quels que soient l'emplacement et les mouvements de la caisse (5) de chargement.

10. Dispositif selon la revendication 8 ou 9, **caractérisé en ce que** l'élément (19) d'arrêt est fixé à la barrière (6) de chargement, pour être pivotant par rapport à un axe horizontal transversal au sens longitudinal de la caisse (5) de chargement de telle sorte que l'élément (19) d'arrêt peut être fait pivoter depuis la position verticale selon un angle vers l'arrière et vers l'avant.

11. Dispositif selon l'une quelconque des revendications 4 à 10, **caractérisé en ce que** le châssis (1) comprend des pieds (3) de support dont la longueur peut être ajustée séparément les uns des autres, pour ajuster la hauteur et la position du châssis (1).

12. Dispositif selon l'une quelconque des revendications 4 à 11, **caractérisé en ce que** le châssis (1) comprend des moyens (11a, 11b) de fixation pour fixer le châssis (1) au conteneur (16) et/ou à un véhicule (15) de transport portant celui-ci.
